Europäisches Patentamt

European Patent Office

Office européen des brevets

(19)

(11) Veröffentlichungsnummer: **0 141 181 B1**

## (12) EUROPÄISCHE PATENTSCHRIFT

(45) Veröffentlichungstag der Patentschrift: **13.05.92**

(21) Anmeldenummer: **84110786.5**

(22) Anmeldetag: **10.09.84**

(51) Int. Cl.⁵: **G01K 5/20**

---

(54) **Maximum-minimum-Thermometer.**

---

(30) Priorität: **09.09.83 DE 3332644**

(43) Veröffentlichungstag der Anmeldung:
**15.05.85 Patentblatt 85/20**

(45) Bekanntmachung des Hinweises auf die
Patenterteilung:
**13.05.92 Patentblatt 92/20**

(84) Benannte Vertragsstaaten:
**DE FR GB**

(56) Entgegenhaltungen:
**DE-A- 2 644 954**
**US-A- 2 930 234**

(73) Patentinhaber: **Faller, Dagmar**
**Otto-Schott-Strasse 19**
**W-6980 Wertheim(DE)**

(72) Erfinder: **Faller, Dagmar**
**Otto-Schott-Strasse 19**
**W-6980 Wertheim(DE)**

(74) Vertreter: **Lauw, Rudolf C. W.**
**Patentanwalt Karwinskistrasse 1**
**W-8000 München 60(DE)**

---

**Beschreibung**

Die Erfindung bezieht sich auf ein Maximum-Minimum-Thermometer der im Oberbegriff des Anspruchs 1 genannten Art.

Ein Thermometer dieser Art ist in der US-A-2,930,234 beschrieben. Dieses Thermometer umfaßt eine Grundplatte mit an dieser angeordneten Temperaturskalen, ein U-förmiges Kapillarrohr mit einem in diesem angeordneten Quecksilberfaden und an beiden Enden des Quecksilberfadens angeordneten ferromagnetischen Anzeigestiften, eine das obere Ende des Kapillarrohrs verdeckende obere Abdeckkappe und eine das untere Ende verdeckende untere Abdeckkappe sowie einen längs der beiden U-Schenkel des Kapillarrohrs verschiebbaren Magnethalter mit einem Dauermagneten für die Rückführung der Anzeigestifte.

Bei diesem bekannten Thermometer sind die die Extremtemperaturen anzeigenden beiden Anzeigestifte jeweils durch einen angeschweißten "Bremser" ohne zusätzliche äußere Hilfsmittel ausschließlich selbsthemmend gehalten. Falls der "Bremser" eines Anzeigestiftes bei Gebrauch abbricht, ist eine Maximum- bzw. eine Minimum-Anzeige nicht mehr möglich. Außerdem ist der Magnethalter ein das äussere Erscheinungsbild des Thermometers störendes zusätzliches Bauteil, das zwischen den beiden Kapillarrohr-Schenkeln formschlüssig gelagert und bei seinen Längsverschiebungen zwischen diesen geführt ist. Um einen Verlust des den Dauermagneten tragenden Magnethalters zu vermeiden, muß dieser am Thermometer sicher gelagert werden. Eine sichere Halterung des Magnethalters einerseits und eine leichtverschiebbare Anordnung desselben zwischen den beiden Kapillarrohr-Schenkeln andererseits setzt aber eine hohe Fertigungsgenauigkeit bei der Herstellung des Kapillarrohrs voraus. Dies schlägt sich nachteilig in erhöhten Fertigungskosten nieder.

In der DE-A-26 44 954 ist ein weiteres Maximum-Minimum-Thermometer beschrieben, bei dem zur magnetischen Fixierung der beiden Anzeigestifte hinter den beiden Kapillarrohr-Schenkeln je ein Magnetstreifen angeordnet ist. Zur Aufhebung der magnetischen Fixierung der beiden Anzeigestifte müssen die beiden Magnetstreifen von den beiden Anzeigestiften (nach hinten) wegbewegt werden, was konstruktiv sehr aufwendig ist. Außerdem weist dieses Thermometer infolge seiner Konstruktion eine erhöhte Tiefe auf, was ihm ein plumpes, unelegantes Aussehen gibt.

Es ist daher Aufgabe der Erfindung, ein Thermometer der im Oberbegriff des Anspruchs 1 genannten Art zu schaffen, das einfach im Aufbau ist, möglichst wenig Einzelteile aufweist, kostengünstig herstellbar ist, leicht montierbar ist, jederzeit einsatzbereit und funktionstüchtig ist, den Verlust des Rückführungsmagneten vermeidet sowie ein flaches und gefälliges Design aufweist, wobei die für das Betrachten des Thermometers unwichtigen Funktionsteile für die Betrachter möglichst unsichtbar bleiben sollen.

Diese Aufgabe wird gemäß der Erfindung gelöst durch den Gegenstand des Anspruchs 1. Erfinderische Weiterbildungen und vorteilhafte Ausgestaltungen ergeben sich aus den Unteransprüchen.

Das erfindungsgemäße Thermometer besticht durch sein elegantes Erscheinungsbild infolge seiner Flachheit. Die feste Anbringung des Magneten vermeidet den Verlust desselben. Alle Funktionsteile bleiben für den Betrachter nach außen unsichtbar. Die Montage ist einfach und geht schnell von der Hand. Wegen seiner flachen, platzsparenden Bauweise sind die Verpackungs- und Versandkosten gering. Schließlich kann das erfindungsgemäße Thermometer auch in Blister- oder Skin-Verpackungen verkaufsfördernd in Selbstbedienungsläden präsentiert werden.

Weitere Merkmale, Einzelheiten und Vorteile ergeben sich aus nachfolgender Beschreibung einer bevorzugten Ausführungsform der Erfindung sowie aus der in der Anlage beigefügten Zeichnung. Es zeigen:

Fig. 1      eine Vorderansicht des erfindungsgemäßen Maximum-/Minimum-Thermometers mit einer die Temperaturskalen tragenden Grundplatte, einem U-förmigen Kapillarrohr sowie an den Enden der Grundplatte angeordneten, die Enden des Kapillarrohrs verdeckenden Abdeckkappen;

Fig. 2      eine Seitenansicht des Thermometers nach Fig. 1;

Fig. 3      eine Rückansicht des Thermometers nach Fig. 1;

Fig. 4      eine Seitenansicht der Grundplatte nach Fig. 1;

Fig. 5      eine Ansicht der Grundplatte nach Fig. 4 von oben;

Fig. 6      einen Längsschnitt durch die Grundplatte längs der Schnittlinie VI-VI in Fig. 8;

Fig. 7      einen Querschnitt durch die Grundplatte längs der Schnittlinie VII-VII in Fig. 6;

Fig. 8      eine Vorderansicht der Grundplatte nach Fig. 1;

Fig. 9      einen Querschnitt durch die Grundplatte längs der Schnittlinie IX-IX in Fig. 8;

Fig. 10      eine Rückansicht der oberen Abdeckkappe nach Fig. 1;

Fig. 11      eine längs der Schnittlinie XI-XI in Fig. 10 teilweise geschnittene Draufsicht der oberen Abdeckkappe;

Fig. 12    einen Längsschnitt durch die obere Abdeckkappe längs der Schnittlinie XII-XII in Fig. 10;

Fig. 13    eine Rückansicht der unteren Abdeckkappe nach Fig. 1;

Fig. 14    eine längs der Schnittlinie XIV-XIV in Fig. 13 teilweise geschnittene Unteransicht der unteren Abdeckkappe;

Fig. 15    einen Längsschnitt durch die untere Abdeckkappe längs der Schnittlinie XV-XV in Fig. 13;

Fig. 16    eine Vorderansicht eines unter der unteren Abdeckkappe nach Fig. 13 unsichtbar angeordneten Halters zur Fixierung des U-förmigen Kapillarrohrs nach Fig.1 in seiner Gebrauchslage;

Fig. 17    eine Draufsicht des Halters nach Fig. 16;

Fig. 18    eine Seitenansicht des Halters nach Fig. 16;

Fig. 19    eine Rückansicht des Halters nach Fig. 16 und

Fig. 20    eine Gesamtansicht des Thermometers nach Fig. 1 mit der unteren Abdeckkappe als mit einem Dauermagneten versehenes Schiebeelement in Ruhe- und Arbeitslage und

Fig. 21    eine teilweise im Schnitt dargestellte Teilansicht des Kapillarrohrs mit Quecksilberfaden und einem Anzeigestift mit in Gebrauchslage federnd an der Innenwand des Kapillarrohrs anliegendem Bremselement.

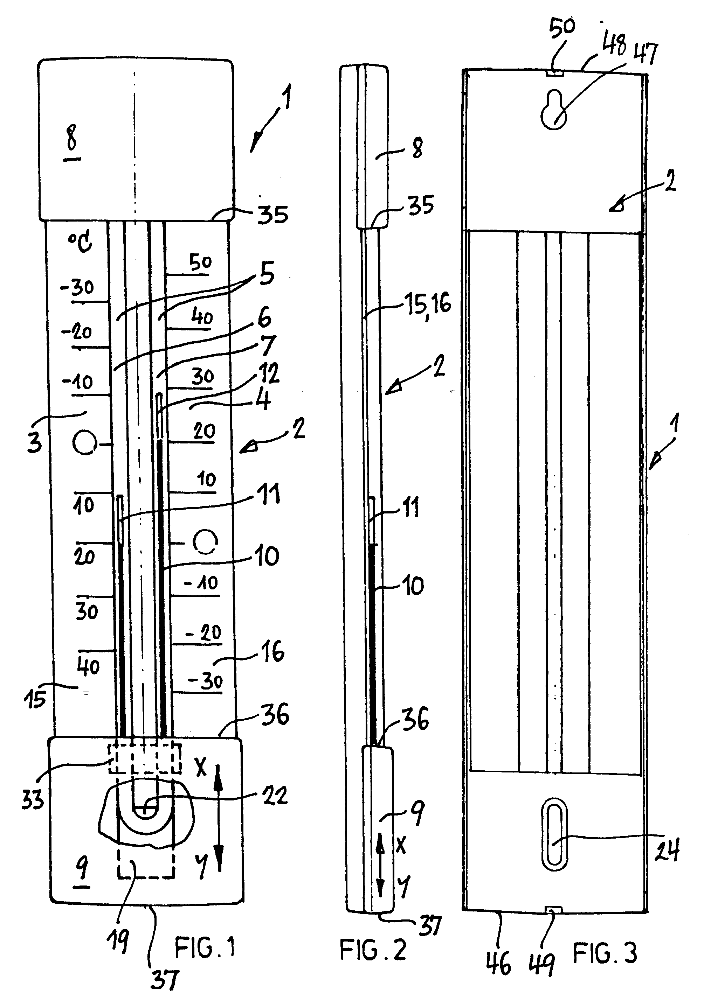

Fig. 1 zeigt ein Maximum-/Minimum-Thermometer 1 gemäß der Erfindung mit einer vorzugsweise zwei Temperaturskalen 3,4 aufweisenden Grundplatte 2, einem an der Grundplatte 2 angeordneten U-förmigen Kapillarrohr 5 mit einem linken Schenkel 6 und einem rechten Schenkel 7 sowie mit einer am oberen Ende des Thermometers 1 angeordneten oberen Abdeckkappe 8 und einer am unteren Ende des Thermometers 1 angeordneten unteren Abdeckkappe 9.

In den beiden Schenkeln 6,7 des Kapillarrohrs 5 sind ein (hier nicht im Bild dargestelltes) Ausdehnungsmedium, ein Quecksilberfaden 10 sowie magnetisch anziehbare Anzeigestifte 11,12 angeordnet. Die Anzeigestifte 11,12 dienen zur nachträglichen Feststellung von Extremtemperaturen, beispielsweise der tiefsten Nachttemperatur und/oder der höchsten Tagestemperatur. In ihrer Ausgangsposition berühren die Anzeigestifte 11,12 jeweils die beiden Enden des Quecksilberfadens 10. Sie werden von diesem bei Abfall bzw. Anstieg der Umgebungstemperatur bis zur herrschenden Extremtemperatur im unteren bzw. oberen Temperaturbereich vorgeschoben und verharren dort in ihrer Extremposition, auch wenn sich der Quecksilberfaden 10 inzwischen infolge Temperaturanstiegs bzw- Temperaturabfalls von der vorher herrschenden Extremtemperatur entfernt hat. Die Beibehaltung der Extrempositionen der beiden Anzeigestifte 11,12 wird durch hinter den beiden Schenkeln 6,7 des Kapillarrohrs 5 oder seitlich derselben angeordnete, längs derselben verlaufende dauermagnetische Haftstreifen 13,14 bewirkt, die die Anzeigestifte magnetisch anziehen und in ihrer Extremposition festhalten.

Die Rückführung der beiden Anzeigestifte 11,12 in ihre Ausgangsposition über den Enden des Quecksilberfadens 10 wird nachfolgend noch eingehend erläutert.

Zunächst werden noch einige konstruktive Besonderheiten des erfindungsgemäßen Thermometers 1 und seiner Einzelteile, insbesondere der Grundplatte 2 und der oberen und unteren Abdeckkappen 8,9 näher beschrieben:

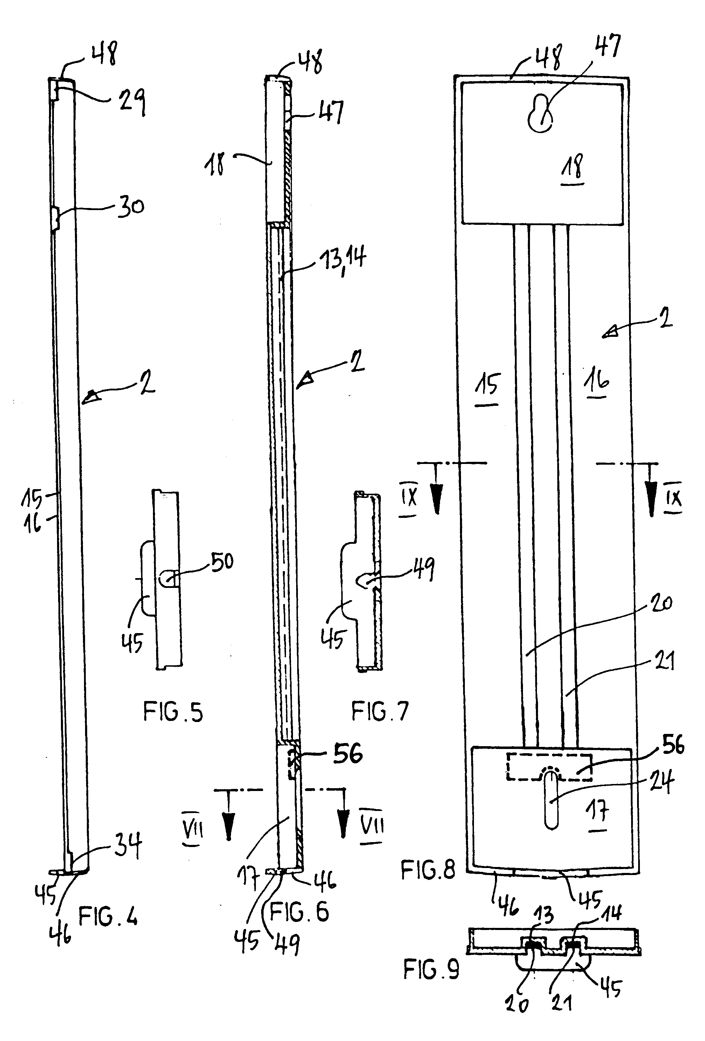

Die Grundplatte 2 wird, wie sich besonders aus den Fig. 4 bis 9 ergibt, mit umlaufenden Versteifungsrippen bzw. -stegen, welche hier nicht eigens beschrieben werden, vorzugsweise in einem Stück, vorzugsweise aus einem plastisch verformbaren Werkstoff im Spritzgußverfahren hergestellt. Dieser Werkstoff könnte, weil die eigenartig neue Konstruktion des Thermometers 1 dies zuläßt, auch ein durchsichtiger oder durchscheinender Werkstoff beispielsweise Kunststoff, wie Polystyrol®, Acrylglas od. dgl. sein, was dem Thermometer 1 ein sehr gefälliges Aussehen verleiht. Die erfindungsgemäße Konstruktion des Thermometers 1 bringt es darüber hinaus mit sich, daß dieses, wie Fig. 2 zeigt, in fertig montiertem Zustand äußerst flach ist, was ihm, im Vergleich zu den bekannten Maximum-Minimum-Thermometern, ein wesentlich kompakteres und damit eleganteres Erscheinungsbild verleiht.

Im einzelnen weist die Grundplatte 2 gemäß der Erfindung folgende Einzelheiten auf: An ihrem unteren und oberen Ende sind Vertiefungen 17,18 vorgesehen, in denen zum einen die für das Ausdehnungsmedium erforderlichen Verdickungen des später einzusetzenden Kapillarrohrs 5 und zum anderen dessen Halteklips 19 zur Sicherung des Kapillarrohrs 5 in seiner Gebrauchslage untergebracht sind. An den beiden hervortretenden Planflächen 15,16 sind die beiden Temperaturskalen 3,4 zur Ablesung der augenblicklichen und der Maximum- und Minimumtemperaturen angebracht, vorzugsweise aufgedruckt.

Die zwischen den beiden Planflächen 15,16 von unten nach oben verlaufenden beiden Schenkel 6,7 des Kapillarrohrs 5 sind in Gebrauchslage vorzugsweise in an der Grundplatte 2 ausgebildeten, zwischen den Vertiefungen 17,18 von unten nach oben verlaufenden Nuten 20,21 eingelassen, wie die Fig. 8,9 erkennen lassen. Es ist bekannt, derartige Kapillarrohre in Nuten anzuordnen. Der Querschnitte der Nuten 20,21 ist in dieser Ausführungsform der Erfindung rechtwinkelig, er könnte aber auch etwa halbkreisförmig sein oder jede andere denkbare Form aufweisen. Die Nutbreite B ist geringfügig breiter als der Durchmesser D der Schenkel 6,7 des Kapillarrohrs 5, so daß die Schenkel 6,7 mit ausreichendem Spiel in die Nuten 20,21 einsetzbar sind. Vorzugsweise sollten die Schenkel 6,7 in ihrer Gebrauchslage etwa zur Hälfte in den Nuten 20,21 versinken, so daß der in ihnen enthaltene Quecksilberfaden 10 und die Temperaturskalen 3,4 praktisch auf einer Höhe liegen und damit vom Betrachter gleich weit entfernt sind. Dadurch vermeidet man sogenannte Parallaxenfehler, die zu ungenauen Temperaturablesungen führen können. Dadurch ergibt sich für das Kapillarrohr 5 ein gewisser Schutz vor mechanischer Beschädigung bzw. vor Bruch, da es in den Nuten 20,21 geführt und darin teilweise versenkt ist. Ausserdem wird durch die Nuten 20,21 die Montage der vorstehend bereits erwähnten dauermagnetischen Haftstreifen 13,14 in den Nuten 20,21 wesentlich erleichtert, da diese ja die spätere Gebrauchslage der Haftstreifen 13,14 vorgeben.

Vorzugsweise sind nur am Nutgrund der Nuten 20,21 Haftstreifen 13,14 vorgesehen und mittels geeigneter Haftmittel dauerhaft darin befestigt, so daß sie in Gebrauchslage vollständig von den beiden Schenkein 6,7 des Kapillarrohrs 5 verdeckt und somit für den Betrachter unsichtbar sind. Falls nötig oder erwünscht, könnte man die Haftstreifen 13,14 ersatzweise oder zusätzlich auch seitlich in den Nuten 20,21 anbringen, so daß sie in Gebrauchslage seitlich des Kapillarrohrs 5 zu liegen kommen. Dies hätte jedoch den ästhetischen Nachteil, daß der Betrachter sie nun sehen könnte.

Gemäß einer Weiterbildung der Erfindung sind die Haftstreifen 13,14 auf ihrer dem Betrachter zugewandten Seite hell, vorzugsweise weiß, beschichtet. Sie erleichtern auf diese Weise die Erkennung der Enden des Quecksilberfadens 10. Außerdem werden sie vom Betrachter dann nicht mehr bemerkt und als störend empfunden, falls ihre Ursprungsfarbe zum Beispiel schwarz, grau oder braun wäre. Bisher wurde der Kontrast des Quecksilberfadens eines Thermometers und damit dessen Ablesbarkeit in der Regel durch eine helle Beschichtung der Rückseite des Kapillarrohrs, beispielsweise durch eine weiße Emailglasschicht, verbessert, weil sich davor der Quecksilberfaden deutlich sichtbar abhebt. Auf diese Maßnahme kann bei dem erfindungsgemäßen Thermometer 1 vorteilhafterweise verzichtet werden, da ja die hell bzw. weiß schimmernden Haftstreifen 13,14 hinter dem Kapillarrohr 5 für den Quecksilberfaden 10 den geeigneten Hintergrund bilden, der eine weitere zusätzliche Beschichtung des Kapillarrohrs 5 überflüssig macht. Ein mit einer Emailglasschicht versehenes Kapillarrohr ist wesentlich teuerer als unbeschichtetes Material.

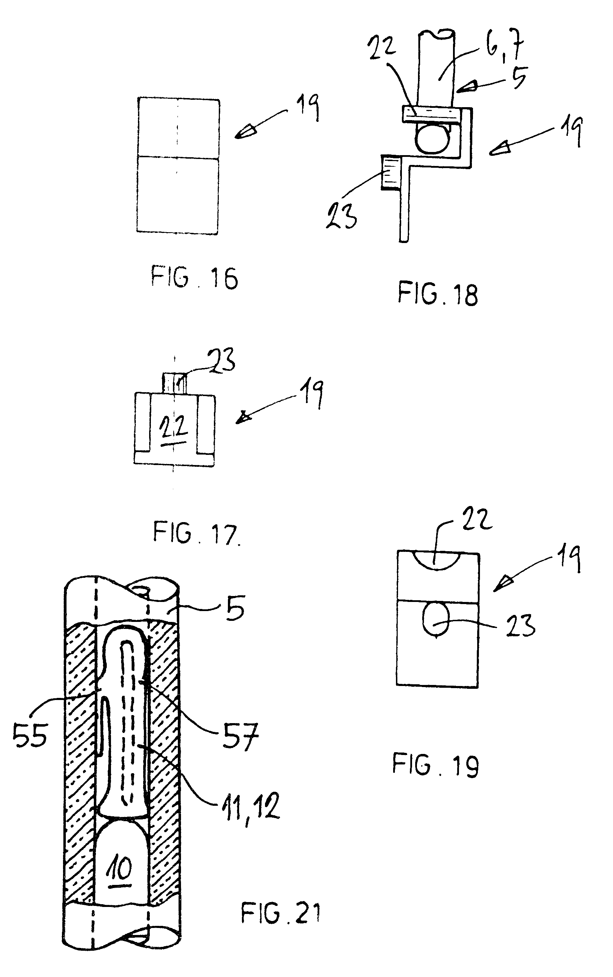

Zur Montage und Sicherung des U-förmigen Kapillarrohrs 5 in seiner Gebrauchslage wird ein in den Fig. 16 bis 18 dargestellter Halteklips 19 verwendet. Der Halteklip 19 weist einen das Kapillarrohr 5 in seinem gebogenen Bereich übergreifenden und es festhaltenden Kragarm 22 sowie einen Zapfen 23 auf, der in Gebrauchslage in eine an der Grundplatte 2 vorgesehene, als Langloch ausgebildete Durchbrechung 24 eingeführt und darin nach temperaturgenauer Justierung des Kapillarrohrs 5 bezüglich der Temperaturskalen 3,4 dauerhaft befestigt, vorzugsweise verschweißt, ultraschallverschweißt oder verklebt wird.

Nach erfolgter Herstellung einer dauerhaften Verbindung zwischen der Grundplatte 2 und dem Kapillarrohr 5 brauchen nun nur noch die obere und die untere Abdeckkappe 8,9 an der Grundplatte 2 angeordnet und in ihrer Gebrauchslage gesichert zu werden.

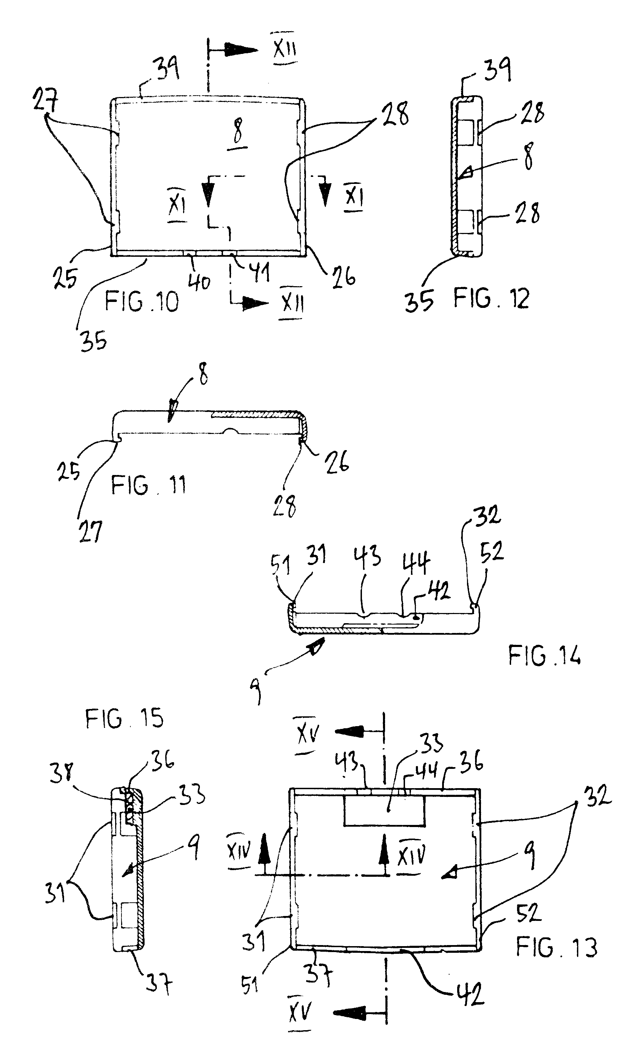

Wie die Fig. 10 bis 12 zeigen, weist die obere Abdeckkappe 8 an ihren in Gebrauchslage seitlich angeordneten Rändern 25,26 jeweils zwei klauenförmige Fortsätze 27,28 auf, die bei Montage an der Grundplatte 2 derart über deren Seitenränder schnappbar sind, daß die obere Abdeckkappe 8 daran dauerhaft festsitzt und nur mit größerer gezielter Kraftanstrengung wieder von diesen bzw. von der Grundplatte 2 gelöst werden kann. Eine etwaige Längsverschiebung der oberen Abdeckkappe 8 längs der Seitenränder der Grundplatte 2 wird durch an diesen ausgebildete Anschläge 29,30 unterbunden, wie Fig. 4 zeigt.

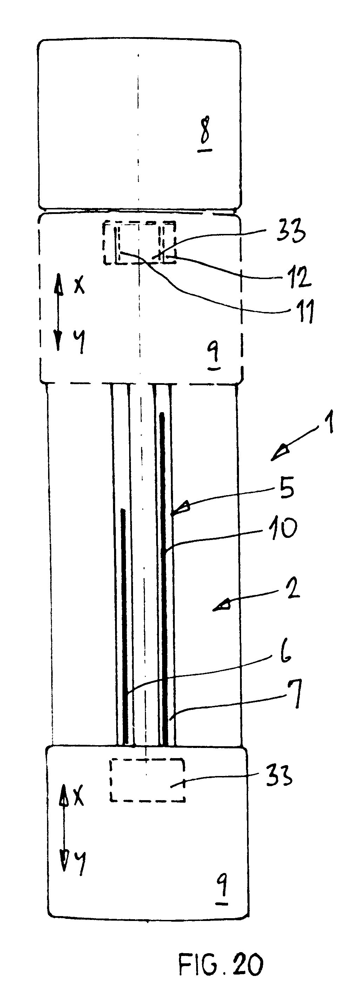

Wie die Fig. 13 bis 15 zeigen, weist die untere Abdeckkappe 9 an ihren in Gebrauchslage seitlich angeordneten Rändern 51,52 jeweils zwei klauenförmige Fortsätze 31,32 auf, die bei Montage an der Grundplatte 2 derart über deren Seitenränder schnappbar sind, daß die untere Abdeckkappe 9 daran dauerhaft festsitzt und nur mit größerer gezielter Kraftanstrengung wieder von diesen bzw. von der Grundplatte 2 gelöst werden kann. Im Gegensatz zur oberen Abdeckkappe 8 kann die untere Abdeckkappe 9 jedoch an der Grundplatte 2 in Längsrichtung der Temperaturskalen 3,4 bzw. der beiden Schenkel 6,7 des Kapillarrohrs 5 in den Richtungen X,Y aus ihrer in den Fig. 1, 2 und 20 gezeigten Ruhelage über die ganze Länge der Temperaturskalen 3,4 hin verschoben werden, wobei die Seitenränder der Grundplatte 2 die Führungen für die sie übergreifenden klauenförmigen Fortsätze 31,32 der unteren Abdeckkappe 9 bilden. Eine etwaige Längsverschiebung der unteren Abdeckkappe 9 über die untere Endposition (Ruhelage) hinaus wird durch an den Seitenrändern der Grundplatte 2 ausgebildete Anschläge 34 unterbunden, wie Fig. 4 zeigt. Als oberer Anschlag für die nach oben verschiebbare Abdeckkappe 9 dient die untere Kante 35 der oberen Abdeckkappe 8, an die die obere Kante 36 der unteren Abdeckkappe 9 in deren obersten Arbeitsstellung zur Anlage gelangt.

Wie die Fig. 13 und 14 zeigen, weist die untere Abdeckkappe 9 auf ihrer dem Betrachter abgewandten Innenseite, vorzugsweise in der Nähe ihrer oberen Kante 36 eine vorgeformte Fläche 38 auf, an der in Gebrauchslage ein Dauermagnet 33 dauerhaft angebracht, vorzugsweise angeklebt ist. Die an der unteren Abdeckkappe 9 angeformte bzw. vorgeformte Fläche 38 erleichtert die Montage des Dauermagneten 33, da sie dessen spätere Gebrauchslage dem Monteur genau vorgibt und auf diese Weise spätere Montagefehler bzw. Montageungenauigkeiten sowie sich hieraus ergebende Funtionsstörungen des Thermometers 1 von vorne herein ausschaltet.

Der Dauermagnet 33 muß eine größere Magnetkraft aufweisen, als die beiden Haftstreifen 13,14. Die Haftstreifen 13,14 sollten "engpolig", der Dauermagnet 33 "weitpolig" magnetisiert sein.

Die obere Abdeckkappe 8 und die untere Abdeckkappe 9 sind, wie die Fig. 10 bis 12 sowie die Fig. 13 bis 15 zeigen, im wesentlichen baugleich. Sie unterscheiden sich geringfügig voneinander durch folgende Merkmale:

Die obere Abdeckkappe 8 ist an ihrer oberen Kante 39 vollkommen geschlossen, da sie ja ortsfest an der Grundplatte 2 der Thermometers 1 angebracht ist. Dagegen ist die untere Abdeckkappe 9 an ihrer unteren Kante 37 (die ja der oberen Kante 39 der oberen Abdeckkappe 8 entspricht) mit einer größeren Auskerbung 42 versehen, damit die untere Abdeckkappe 9 längs der beiden Schenkel 6,7 des Kapillarrohrs 5 nach oben hin verschoben werden kann, wobei die Auskerbung 42 an der unteren Kante 37 der unteren Abdeckkappe 9 praktisch berührhungfrei über den beiden Schenkeln 6,7 des Kapillarrohrs 5 hinweggleitet. Ein weiterer Unterschied zwischen oberer und unterer Abdeckkappe 8,9 besteht, wie schon gesagt, in der Fläche 38, welche die untere Abdeckkappe 9 an ihrer Innenseite nahe ihrer oberen Kante 36 zur Anbringung des Dauermagneten 33 zusätzlich aufweist.

Die obere Abdeckkappe 8 weist, ebenso wie die untere Abdeckkappe 9, jeweils an ihrer den Temperaturskalen 3,4 zugewandten Seite an ihrer Kante 35 bzw. 36 Auskerbungen 40,41 bzw. 43,44 auf, die in Gebrauchslage über den beiden Schenkeln 6,7 des Kapillarrohrs 5 zu liegen kommen bzw. hinweggleiten.

Der Vollständigkeit halber sei gesagt, daß an der unteren Kante 46 der Grundplatte 2 eine nach vorne vorspringende Lasche 45 angeformt ist, die die an der unteren Abdeckkappe 9 vorgesehene Auskerbung 42 verschließt, wenn sie die untere Abdeckkappe 9 in ihrer Grundstellung bzw. Ruhelage befindet. Auf diese Weise erscheint das Gehäuse des erfindungsgemäßen Thermometers 1 allseits geschlossen.

Sollte sich die zwingende Notwendigkeit ergeben, anstelle der unteren Abdeckkappe 9 die obere Abdeckkappe 8 in X-Y-Richtung verschiebbar an der Grundplatte 2 anzuordnen und mit einem Dauermagneten 33 zu versehen, und stattdessen die untere Abdeckkappe 9 an der Grundplatte 2 ortsfest, das heißt unverschiebbar, anzuordnen, ist dies nach entsprechenden konstruktiven Änderungen selbstverständlich möglich. In diesem Falle müßte aber dafür Sorge getragen werden, daß die obere Abdeckkappe 8 die zuvor durch sie nach unten verschobenen Anzeigestifte 11,12 nicht wieder nach oben mitnimmt, wenn die Abdeckkappe 8 in ihre Grundstellung bzw. Ruhelage zurückgeschoben wird. Diese könnte man etwa dadurch erreichen, daß man die obere Abdeckkappe 8 an der Grundplatte 2 federnd lagert. Beim Hinaufschieben der oberen Abdeckkappe 8 in ihre Grundstellung müßte diese bezüglich des Kapillarrohrs 5 ein wenig angehoben werden, um dadurch den Abstand zu letzterem entsprechend zu vergrößern und gleichzeitig seine auf die beiden Anzeigestifte 11,12 wirkende Magnetkraft derart zu vermindern, daß diese Kraft nicht mehr ausreicht, die beiden Anzeigestifte 11,12 bei Verschiebung nach oben mit sich zu ziehen. Allderings ist die vorstehend eingehend erläuterte und in der Zeichnung dargestellte Lösung, als Rückführelement für die Rückführung der beiden Anzeigestifte 11,12 sich der unteren Abdeckkappe 9 zu bedienen, die vernünftigere Lösung. Sie ist funktionssicherer, konstruktiv einfacher und daher billiger.

Schließlich weist das Gehäuse der Grundplatte 2 noch eine Aufhänge-Öse 47 nahe ihrer oberen Kante 48 auf, an der das Thermometer 1 bei Bedarf aufgehängt werden kann. Außerdem weist die Grundplatte 2 an ihrer unteren und oberen Kante 46,48 je eine Aussparung 49,50 auf, in die die Dorne einer das Thermometer 1 von oben und unten klammerartig erfassenden (hier jedoch im Bild nicht dargestellten) Haltevorrichtung einrasten können, um das Thermometer 1 schwenkbar zu lagern und bei Bedarf in Blickrichtung seines Betrachters schwenken zu können.

Die Wirkungsweise des erfindungsgemäßen Thermometers 1 ist folgende:
Sollte sich beispielsweise nach Ablauf einer bestimmten Zeitspanne das Thermometer 1 mindestens einmal in den Bereich höherer oder tieferer Temperaturen hineinbewegt haben, so werden, wie bekannt, die beiden Anzeigestifte 11,12 mehr oder weniger hoch über den beiden Enden des Quecksilberfadens 10 im Kapillarrohr 5 schweben, da sie von den dahinter angeordneten Haftstreifen 13,14 in dieser Lage festgehalten werden. Sollen nun die beiden Anzeigestifte 11,12 wieder in ihre Ausgangslage über den beiden Enden des Quecksilberfadens 10 zurückgeführt werden, so wird einfach die untere Abdeckkappe 9 in Pfeilrichtung X einmal nach oben bis zu ihrem oberen Anschlag hingeschoben und dann in Richtung Y in ihre Grundposition bzw. Ruhelage zurückgeschoben. Dabei wandert der (stärkere) Dauermagnet 33 an der unteren Abdeckkappe 9 über die beiden Anzeigestifte 11,12 hinweg, nimmt sie dabei mit und führt sie nach unten so weit zurück bis sie wieder auf den beiden Enden des Quecksilberfadens 10 aufstoßen. Die (schwächeren) dauermagnetischen Haftstreifen 13,14 erlauben diese Rückführung der Anzeigestifte 11,12, da sie sich der größeren Magnetkraft des (stärkeren) Dauermagneten 33 beugen müssen.

Es sei noch einmal hervorgehoben, daß man den Dauermagneten 33 am unteren Schiebelement 9 sowohl unsichtbar, also an dessen für den Betrachter nicht sichtbaren Innenseite, als auch sichtbar anbringen kann. Es muß nur gewährleistet sein, daß die Magnetkraft des Dauermagneten 33 dafür ausreicht, die Anzeigestifte 11,12 aus ihren Extrempositionen wieder in ihre Ausgangsposition über dem Ende des Quecksilberfadens 10 zurückzuführen.

Das Schiebeelement 9 kann an der Grundplatte 2 auch abnehmbar angebracht sein, wobei dann an der Grundplatte 2 eine ferromagnetische Platte 56 sein muß, an welcher der am Schiebeelement 9 angebrachte Dauermagnet 33 in Ruhelage des Schiebeelements 9 magnetisch anhaftet. Das Schiebeelement 9 wird nur zur Rückführung der Anzeigestifte 11,12 von der Grundplatte 2 abgenommen und anschließend wieder an dieser angebracht. Eine ferromagnetische Platte 56 ist in den Fig. 6 und 8 strichpunktiert dargestellt.

Das vorstehend beschriebene erfindungsgemäße Maximum-Minimum-Thermometer 1 zeichnet sich gegenüber den bisher bekannten Thermometern dieser Art durch nachfolgend aufgeführte Vorteile besonders aus:

1. Das Thermometergehäuse ist infolge seiner beschriebenen konstruktiven Merkmale sehr flach und verbirgt die funktionswesentlichen Teile, beispielsweise die Haftstreifen 13,14, den Dauermagneten 33 und den das Kapillarrohr 5 in Gebrauchslage fixierenden Halteklips 19) für den Betrachter unsichtbar in seinem Inneren.

2. Wegen der nicht sichtbaren Anordnung der Funktionsteile erhält das Thermometer 1 ein gefälliges, elegantes Aussehen.

3. Wegen der dauerhaften Anordnung des Dauermagneten 33 an der Innenseite der verschiebbaren unteren Abdeckkappe 9 ist dieser immer zur Hand und kann nicht verloren gehen.

4. Wegen der geringen Anzahl und der Einfachheit der für das Thermometer 1 erforderlichen Einzelteile ist der Gesamtaufwand für dessen Herstellung, Zwischenlagerung, Montage, Verpackung, Transport und verkaufsunterstützende Maßnahmen (beispielsweise Präsentation in Selbstbedienungsläden, Einhüllung in Blister- oder Skin-Verpackungen und dergleichen) im Vergleich zu den bekannten Thermometern äußerst gering.

Bezugszeichenliste:

| | |
|---|---|
| 1 | Maximum-Minimum-Thermometer |
| 2 | Grundplatte (von 1) |
| 3 | Temperaturskala (Min.-Seite) |
| 4 | Temperaturskala (Max.-Seite) |
| 5 | Kapillarrohr |
| 6 | linker Schenkel (von 5) |
| 7 | rechter Schenkel (von 5) |
| 8 | obere Abdeckkappe (von 1) |
| 9 | untere Abdeckkappe (von 1) |
| 10 | Quecksilberfaden (in 5) |
| 11 | Anzeigestift (in 5) |
| 12 | Anzeigestift (in 5) |
| 13 | dauermagnetischer Haftstreifen |
| 14 | dauermagnetischer Haftstreifen |
| 15 | Planfläche (an 2 für 3) |
| 16 | Planfläche (an 2 für 4) |
| 17 | Vertiefung (in 2 unten) |
| 18 | Vertiefung (in 2 oben) |
| 19 | Halteklips (für 5 an 2) |
| 20 | Nut (für 6 von 5) |
| 21 | Nut (für 7 von 5) |
| 22 | Kragarm (an 19 für 5) |
| 23 | Zapfen (an 19 für 24 an 2) |
| 24 | Durchbrechung (in 2 für 23) |
| 25 | seitlicher Rand (von 8) |
| 26 | seitlicher Rand (von 8) |
| 27 | klauenf. Fortsätze (an 25 von 8) |
| 28 | klauenf. Fortsätze (an 26 von 8) |
| 29 | Anschlag (an 2 für 8) |
| 30 | Anschlag (an 2 für 8) |
| 31 | klauenf. Fortsätze (an 51 von 9) |
| 32 | klauenf. Fortsätze (an 52 von 9) |
| 33 | Dauermagnet (an 9 für 11,12) |
| 34 | Anschlag (an 2 für 9) |
| 35 | untere Kante (von 8) |
| 36 | obere Kante (von 9) |
| 37 | untere Kante (von 9) |
| 38 | vorgeformte Fläche (an 9 für 33) |
| 39 | obere Kante (von 8) |
| 40 | Auskerbung (an 35 für 6 von 5) |
| 41 | Auskerbung (an 35 für 7 von 5) |

| | |
|---|---|
| 42 | Auskerbung (an 37 für 6,7 von 5) |
| 43 | Auskerbung (an 36 für 6) |
| 44 | Auskerbung (an 36 für 7) |
| 45 | Lasche (an 46) |
| 46 | untere Kante (von 2) |
| 47 | Aufhänge-Öse (an 2 oben) |
| 48 | obere Kante (von 2) |
| 49 | Aussparung (an 2 unten) |
| 50 | Aussparung (an 2 unten) |
| 51 | seitlicher Rand (von 9) |
| 52 | seitlicher Rand (von 9) |
| B | Breite (von 20,21) |
| D | Durchmesser (von 6,7 von 5) |
| X | Verschieberichtung nach oben (von 9) |
| Y | Verschieberichtung nach unten (von 9) |
| 55 | Bremselement (an 11,12) |
| 56 | magnetische Platte (an 2 für 33) |
| 57 | ferromagnetischer Draht (in 11,12) |

**Patentansprüche**

1.  Maximum-Minimum-Thermometer

    (a) mit einer formstabilen Grundplatte (2),

    (b) mit an der Grundplatte (2) angeordneten Temperaturskalen (3,4),

    (c) mit einem U-förmigen Kapillarrohr (5), dessen beide U-Schenkel (6,7) entlang der Temperaturskalen (3,4) verlaufend angeordnet sind, und in dem ein Ausdehnungsmedium, ein Quecksilberfaden (10) sowie durch den Quecksilberfaden (10) verschiebbare ferromagnetische Anzeigestifte (11,12) zur Anzeige der Maximum- bzw. der Minimum-Temperaturen vorgesehen sind,

    (d) mit einer die oberen Enden der beiden U-Schenkel (6,7) des Kapillarrohrs (5) verdeckenden oberen Abdeckkappe (8) und einer den U-Steg des Kapillarrohrs (5) verdeckenden unteren Abdeckkappe (9), wobei die beiden Abdeckkappen (8,9) an der Grundplatte (2) angebracht sind, und

    (e) mit einem längs der beiden U-Schenkel (6,7) des Kapillarrohrs (5) verschiebbar gelagerten Schiebeelement, an dem zumindest ein Dauermagnet (33) zur gleichzeitigen Rückstellung der beiden Anzeigestifte (11,12) aus ihren Extrempositionen in ihre Ausgangspositionen angeordnet ist, **dadurch gekennzeichnet**,

    (f) daß an der Vorderseite der Grundplatte (2) zwei voneinander in einem Abstand, der dem Abstand der beiden U-Schenkel (6,7) des Kapillarrohrs (5) entspricht, angeordnete, zueinander parallel verlaufende Nuten (20,21) ausgebildet sind, in denen jeweils zumindest ein dauermagnetischer Haftstreifen (13,14) unbeweglich angeordnet ist und in denen je ein Schenkel (6,7) des Kapillarrohrs (5) gelagert ist, derart, daß die Haftstreifen (13,14) die jeweils in den U-Schenkeln (6,7) angeordneten Anzeigestifte (11,12) magnetisch anziehen, und

    (g) daß die untere Abdeckkappe (9) an der Grundplatte (2) in Längsrichtung der beiden Schenkel (6,7) zwischen zwei fest fixierten Endpunkten verschiebbar angebracht ist und das den Dauermagneten (33) tragende Schiebeelement (9) bildet, wobei der Dauermagnet (33) die beiden U-Schenkel (6,7) des Kapillarrohrs (5) quer übergreift und eine die Magnetkraft der Haftstreifen (13,14) übertreffende Magnetkraft aufweist, und das Schiebeelement (9) an beiden Seitenrändern der Grundplatte (2) in deren Längsrichtungen (X,Y) längsverschiebbar angebracht ist.

2.  Thermometer nach Anspruch 1, **dadurch gekennzeichnet**, daß die obere Abdeckkappe (8) in Gebrauchslage an der Grundplatte (2) fest angeordnet ist.

3.  Thermometer nach Anspruch 1 oder 2, **dadurch gekennzeichnet**, daß die untere Abdeckkappe (9) an der Grundplatte (2) abnehmbar angeordnet und in ihrer Ruhelage an einer an der Grundplatte (2) angeordneten, mit dem Dauermagneten (3) zusammenwirkenden ferromagnetischen Platte (56) od. dgl. lösbar befestigt ist.

4.  Thermometer nach einem der Ansprüche 1 bis 3, **dadurch gekennzeichnet**, daß der Dauermagnet (33) an der für den Betrachter nicht sichtbaren Innenseite des Schiebeelements (9) unsichtbar angebracht ist.

5.  Thermometer nach einem der Ansprüche 1 bis 4, **dadurch gekennzeichnet**, daß die Nuten (20,21) im Querschnitt rechtwinkelig sind und eine derartige Tiefe aufweisen, daß die beiden Schenkel (6,7) des Kapillarrohrs (5) jeweils etwa nur zur Hälfte in diese einlaßbar sind.

6.  Thermometer nach einem der Ansprüche 1 bis 5, **dadurch gekennzeichnet**, daß die Haftstreifen (13,14) in den Nutgrund der Nuten (20,21) eingeklebt sind.

**7.** Thermometer nach einem der Ansprüche 1 bis 6, dadurch gekennzeichnet, daß die Haftstreifen (13,14) an ihrer dem Betrachter zugewandten Seite hell, vorzugsweise weiß beschichtet sind.

**8.** Thermometer nach einem der Ansprüche 1 bis 7, dadurch gekennzeichnet, daß die Grundplatte (2) aus einem durchsichtigen oder durchscheinenden Werkstoff, vorzugsweise Kunststoff, gefertigt ist, und daß die obere und untere Abdeckkappe (8,9) aus einem nicht durchsichtigten Werkstoff gefertigt sind.

**9.** Thermometer nach einem der Ansprüche 1 bis 8, dadurch gekennzeichnet, daß die obere und untere Abdeckkappe (8,9) mit Rastteilen (27,28/31,32) versehen sind, die in Gebrauchslage an entsprechenden Gegenrasten bzw. Nutführungen längs der Seitenränder der Grundplatte (2) derart einrastbar sind, daß die untere Abdeckkappe (9) längs der Nutführung der Grundplatte (2) verschiebbar ist.

**10.** Thermometer nach Anspruch 9, dadurch gekennzeichnet, daß bei der Nutführung sowohl die Seitenränder der Grundplatte (2) als auch die Seitenränder (25,26/51,52) die Nut aufweisen, während dann die entsprechenden Wirkteile der Gegenteile die in die Nuten eingreifenden Finger bzw. Leisten aufweisen.

## Claims

**1.** Maximum-minimum-thermometer comprising:
(a) a rigid base plate (2),
(b) temperature scales (3, 4) provided on the base plate (2),
(c) a U-shaped capillary pipe (5) the two U-legs (6, 7) of which are extending along the temperature scales (3, 4), and in which are provided an expansion medium, a mercury thread (10), and ferromagnetic indicator pins (11, 12) movable by the mercury thread (10) for indicating the maximum or the minimum temperatures, respectively,
(d) an upper cover covering the upper ends of the two U-legs (6, 7) of the capillary pipe (5), and a lower cover covering the U-cross piece of the capillary pipe (5) with the two covers (8, 9) provided on the base plate (2), and
(e) a slidably mounted sliding element slidable along the two U-legs (6, 7) of the capillary pipe (5), on which at least one permanent magnet (33) is mounted for simultaneous resetting of the two indicator pins (11, 12) from their extremal positions into their initial positions,
characterized in that,
(f) two parallel grooves (20, 21) provided on the front side of the base plate (2) and spaced apart by a distance corresponding to the distance between the two U-legs (6, 7) of the capillary pipe (5), are formed, in each of which at least one permanent magnetic adhesive strip (13, 14) is fixed mounted, and in each of which one leg (6, 7) of the capillary pipe (5) is accommodated such that the adhesive strips (13, 14) magnetically attract the respective indicator pins (11, 12) provided in the U-legs (6, 7), and
(g) the lower cover (9) is slidably mounted on the base plate (2) to slide in a longitudinal direction of the two legs (6, 7) between two fixed terminal points, and is forming the sliding element (9) carrying the permanent magnet (33), the permanent magnet (33) transversely bridging the two U-legs (6, 7) of the capillary pipe (5) and comprising a magnetic forces greater than the magnetic forces of the adhesive strips (13,14), and the sliding element (9) is provided longitudinally slidable on the two sides of the base plate (2) in their longitudinal directions (X, Y).

**2.** Thermometer according to claim 1 characterized in that the upper cover (8) is fixed mounted on the base plate (2) in an operational position.

**3.** Thermometer according to claims 1 or 2 characterized in that the lower cover (9) is removably provided on the base plate (2) and is detachably mounted in its resting position on a ferromagnetic plate (56) or similar provided on the base plate (2) and cooperating with the permanent magnet (33).

**4.** Thermometer according to one of the claims 1 to 3 characterized in that the permanent magnet (33) is invisibly mounted on the inner side of the sliding element (9) which is not visible for the viewer.

**5.** Thermometer according to one of the claims 1 to 4 characterized in that the grooves (20, 21) have a right-angled cross section and comprise a depth such that the two legs (6, 7) of the capillary pipe (5) each can only about half ways be received.

**6.** Thermometer according to one of the claims 1 to 5 characterized in that the adhesive strips (13, 14) are glued to the bottom of the grooves (20, 21).

**7.** Thermometer according to one of the claims 1 to 6 characterized in that the sides of the adhesive strips (13, 14) facing the viewer are coated in a bright coulour, preferably white.

**8.** Thermometer according to one of the claims 1 to 7 characterized in that the base plate (2) is made of a transparent or translucent material preferably plastics, and that the upper and the lower cover (8, 9) are made of a opaque material.

**9.** Thermometer according to one of the claims 1 to 8 characterized in that the upper and the lower cover (8, 9) are provided with captures or notches (27, 28/31, 32) which in an operational position can be engaged with complementary captures or groove guide ways, respectively, along the side edges of the base plate (2) such that the lower cover (9) is slidable along the groove guide ways of the base plate (2).

**10.** Thermometer according to claim 9 characterized in that the side edges of the base plate (2) as well as the sides (25, 26/51, 52) comprise the groove guide ways with the respective cooperating complementary parts comprising fingers or gibs engaging in the grooves.

**Revendications**

**1.** Thermomètre maximum-minimum comprenant
(a) une plaque de base (2) de forme stable
(b) des échelles de température (3,4) disposées sur la plaque de base (2)
(c) un tube capillaire (5) en forme de U dont les deux branches du U (6,7) sont disposées le long des échelles de température (3,4), et dans lequel sont prévus une matière dilatable, un fil de mercure (10) ainsi que des pointes indicatrices (11,12) pour indiquer les maximums-minimums pouvant être déplacées par le fil de mercure (10),
(d) une chape recouvrant les extrémités supérieures des deux branches de U (6,7) du tube capillaire (5) et une chape inférieure (9) recouvrant la base de U du tube capillaire (5), les deux chapes (8,9) étant fixées sur la plaque de base (2), et
(e) un élément glissant disposé de façon à pouvoir être glissé le long des deux branches de U (6,7) du tube capillaire (5), sur lequel est disposé au moins un aimant permanent (33) en vue du rappel simultané des deux pointes indicatrices (11,12) de leurs positions extrêmes à leurs positions de départ,
caractérisé en ce que
(f) sont pratiquées dans la face antérieure de la plaque de base (2) deux rainures (20,21) disposées parallèlement l'une à l'autre à une distance l'une de l'autre correspondant à l'écart des deux branches de U (6,7) du tube capillaire (5), rainures dans lesquelles est respectivement disposée de façon immobile une bande adhésive (13,14) à aimantation permanente, et dans lesquelles repose respectivement une branche (6,7) du tube capillaire (5) de manière à ce que les bandes adhésives (13,14) attirent magnétiquement les pointes indicatrices (11,12) disposées respectivement dans les branches de U (6,7), et
(g) que la chape inférieure (9) est fixée sur la plaque de base (2) longitudinalement par rapport aux deux branches (6,7) de façon à pouvoir être déplacée entre deux points extrêmes fixes et forme l'élément glissant (9) supportant l'aimant permanent (33), l'aimant permanent (33) embrassant transversalement les deux branches du U (6,7) du tube capillaire (5) et ayant une force magnétique supérieure à celle des bandes adhésives (13,14), et que l'élément glissant (9) est disposé sur les deux rebords latéraux de la plaque de base (2) dans la direction longitudinale (X,Y) de ceux-ci et de façon à pouvoir être déplacé longitudinalement.

**2.** Thermomètre selon la revendication 1, caractérisé en ce que, en position d'utilisation, la chape supérieure (8) est disposée de manière fixe sur la plaque de base (2).

**3.** Thermomètre selon la revendication 1 ou 2, caractérisé en ce que la chape inférieure (9) est disposée de façon amovible sur la plaque de base (2) et que, dans sa position de repos, elle est fixée de manière détachable sur une plaque ferromagnétique (56) ou analogue disposée sur la plaque de base (2) et coopérant avec l'aimant permanent (3).

**4.** Thermomètre selon l'une des revendications 1 à 3, caractérisé en ce que l'aimant permanent (33) est disposé sur la face intérieure invisible à l'observateur de l'élément glissant (9).

5. Thermomètre selon l'une des revendications 1 à 4, caractérisé en ce que les rainures (20,21) présentent une coupe rectangulaire et une profondeur telle que les deux branches du U (6,7) du tube capillaire (5) ne peuvent y être enfoncés qu'environ à moitié.

6. Thermomètre selon l'une des revendications 1 à 5, caractérisé en ce que les bandes adhésives (13,14) sont collées sur le fond des rainures (20,21).

7. Thermomètre selon l'une des revendications 1 à 6, caractérisé en ce que les bandes adhésives (13,14) sont enduites d'une couleur claire, de préférence blanche, sur leur côté tourné vers l'observateur.

8. Thermomètre selon l'une des revendications 1 à 7, caractérisé en ce que la plaque de base (2) est fabriquée en un matériau transparent ou translucent, de préférence en matière plastique, et que la chape supérieure et la chape inférieure (8,9) sont fabriquées en un matériau non transparent,

9. Thermomètre selon l'une des revendications 1 à 8, caractérisé en ce que la chape supérieure et la chape inférieure (8,9) sont dotées de crans (27,28/31,32) qui, en position d'utilisation, peuvent être encliquetés dans des contre-crans ou rainures pratiqués le long des rebords de la plaque de base (2), de telle manière que la chape inférieure (9) puisse être déplacée le long de la rainure de guidage de la plaque de base (2).

10. Thermomètre selon la revendication 9, caractérisé en ce que, dans le cas de la rainure de guidage, aussi bien les bords latéraux de la plaque de base (2) que les rebords (25,26/51,52) sont dotés de cette rainure, tandis que les pièces coopérantes des contre-pièces présentent les doigts ou baguettes s'engageant dans les rainures.

FIG.1

FIG.2

FIG.3

48
29
30
2
15
16
34
45
FIG.4
46

48
47
18
13,14
2
50
45
FIG.5

56
VII
VII
17
46
FIG.6
45
49

47
45
49
FIG.7

48
47
18
2
15
16
IX
IX
20
21
56
24
17
FIG.8
46
45

13
14
FIG.9
20
21
45

FIG. 10

FIG. 12

FIG. 11

FIG. 14

FIG. 15

FIG. 13

FIG . 16

FIG.18

FIG . 17.

FIG . 19

FIG.21

14

FIG. 20